(19) Europäisches Patentamt
European Patent Office
Office européen des brevets

(11) Veröffentlichungsnummer: **0 024 675**
**B1**

(12) # EUROPÄISCHE PATENTSCHRIFT

(45) Veröffentlichungstag der Patentschrift: **08.02.84**

(51) Int. Cl.³: **B 01 J 49/00**

(21) Anmeldenummer: **80104924.8**

(22) Anmeldetag: **19.08.80**

(54) **Verfahren zum Regenerieren von Ionenaustauschern.**

(30) Priorität: **29.08.79 DE 2934863**

(43) Veröffentlichungstag der Anmeldung: **11.03.81 Patentblatt 81/10**

(45) Bekanntmachung des Hinweises auf die Patenterteilung: **08.02.84 Patentblatt 84/06**

(84) Benannte Vertragsstaaten: **AT BE CH DE FR GB IT LI LU NL SE**

(56) Entgegenhaltungen:
**BE-A- 875 961**
**DE-C- 868 433**
**FR-A- 1 577 410**
**GB-A- 1 028 987**

(73) Patentinhaber: **Tetra Werke Dr.rer.nat. Ulrich Baensch GmbH**
**Herrenteich 70**
**D-4520 Melle (DE)**

(72) Erfinder: **Ritter, Günter, Dr.**
**Saarlandstrasse 10**
**D-4980 Bünde 1 (DE)**

(74) Vertreter: **Depmeyer, Lothar**
**Auf der Höchte 30**
**D-3008 Garbsen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 024 675 B1

Jouve, 18, rue St-Denis, 75001 Paris, France

# Verfahren zum Regenerieren von Ionenaustauschern

Ionenaustauscher haben sich als besonders geeignet zur Aufbereitung von Aquarienwasser erwiesen; insbesondere sogenannte IDE-Harze mit ionenaustauschenden Eigenschaften, welche gegenüber den Ionen der Übergangsmetalle, der Erdalkalimetalle und der Alkalimetalle eine deutlich abgestufte Affinität aufweisen (vgl. dazu BE-A 875.961 und « Chelatbildende Ionenaustauscher » R. Hering, Akademie Verlag Berlin 1967 S. 36 ff). Die besonderen Eigenschaften der sogenannten Ionenaustauscherharze ermöglichen insbesondere den Einsatz auf dem Aquariensektor im sogenannten Batch-Verfahren, d. h. das Austauscherharz wird in einem geeigneten wasserdurchlässigen Gefäß in das Aquarienwasser getaucht und dort belassen. Dabei stellt sich das angestrebte natürliche Kationen-Molverhältnis von selbst ein.

Die Zusammensetzung des Wassers kann hierbei genau auf die Bedürfnisse der darin lebenden Organismen abgestellt werden, ohne daß Zusätze zugegeben werden müssen, die in natürlichen Wässern nicht vorkommen.

Die bereits erwähnte besondere Affinität von IDE-Harzen, wie z. B. von Polyvinyl-N-Benzyliminodiessigsäuregruppen enthaltenden Harzen ermöglicht die Entfernung von Spurenelementen der Übergangsreihe mit und ohne Beeinflussung der übrigen Ionen, die Beeinflussung der Gesamthärte durch Erhöhung oder Verringerung der Konzentration an Magnesium und Calciumionen, sowie die Verschiebung des $Mg^{++}/Ca^{++}$-Ionenverhältnisses, sowie die Veränderung der $Na^{+}$- und $K^{+}$-Ionenkonzentration, bzw. die Verschiebung des $Na^{+}/K^{+}$-Ionenverhältnisses.

Je nach der gestellten Aufgabe wird hierbei ein Austauscherharz eingesetzt, das in einem genau festgelegten Verhältnis mit Wasserstoff-, Natrium-, Magnesium- und/oder Calciumionen beladen ist.

Für Süßwasser werden z. B. im Molverhältnis 200 : 1 bis 1 : 10 mit Calcium- und Magnesiumionen beladene Ionenaustauscher eingesetzt.

Für den Fall, daß ein Wasser mit kleiner Gesamt- und Carbonathärte gewünscht wird, setzt man den Ionenaustauscher in der $H^{+}$-Form ein.

Wird ein Wasser mit geringer Gesamthärte, aber hoher Carbonathärte gewünscht, nimmt man einen Austauscher in der $Na^{+}$-Form.

Dem natürlichen Meerwasser entsprechende Verhältnisse erreicht man durch Einsatz eines im Molverhältnis 1 : 1 bis 1 : 2 mit Calcium- und Magnesiumionen beladenen Austauschers.

Da Aquaristik weit überwiegend im privaten Bereich betrieben wird, ist es wichtig, Wasseraufbereitungsverfahren zu schaffen, die möglichst ohne apparativen Aufwand durchgeführt werden können und obendrein preisgünstig sind.

Nachteilig an dem oben beschriebenen Verfahren ist, daß die zu verwendenden Ionenaustauscher in einem ganz bestimmten Verhältnis der Kationen vorbeladen sein müssen. Eine einfache Regenerierung der Harze zur wiederholten Verwendung schien bisher nicht möglich oder mindestens im privaten Bereich nicht realisierbar, da sich reproduzierbare Ionen-Verhältnisse bislang allenfalls unter Einsatz großer Elektrolytmengen im sogenannten Säulenverfahren erzielen lassen. Definierte Beladungszustände waren für den Hobby-Aquarianer daher praktisch nicht einstellbar.

In der DE-C-868.433 wird vorgeschlagen, erschöpfte Ionenaustauscherfilter mittels wasserlöslicher Aminosäuren oder mit deren wasserlöslichen Salzen zu regenerieren. Hierbei erfolgt der Austausch jedoch so langsam, dass die Regenerierlösung im Kreislauf durch das zu regenerierende Filter gepumpt werden muss (Beispiel 1).

Auch in der GB-A-10 28 987 werden zur Regenerierung stark saurer, Sulfonatgruppen enthaltender Harze Alkalimetallsalze von Chelatbildnern eingesetzt, die sich jedoch für die rasche Regenerierung schwach saurer IDE-Harze nicht eignen. Demgemäss wird auch hier die Regenerierung im Recycling-Verfahren empfohlen (Spalte 2, Zeilen 100-118).

Aufgabe der vorliegenden Erfindung ist es, ein Verfahren zur Herbeiführung definierter Beladungszustände von Ionenaustauschern zu schaffen und dadurch die einfache und genaue Einstellung gewünschter Ionenverhältnisse zu ermöglichen.

Es wurde gefunden daß sich Ionenaustauscher besonders einfach und unter Erzielung eines genau vorherbestimmbaren Kationenverhältnisses regenerieren lassen, wenn man anstelle üblicher Elektrolytlösungen Lösungen verwendet, welche Chelatkomplexe von Alkali- und Erdalkaliionen von Chelatbildnern wie z. B. Äthylendiamintetraessigsäure, Nitrilotriessigsäure, Diaminocyclohexantetraacetat und/oder Diäthylentriaminpentaacetat in vorbestimmten Molverhälntnissen enthalten. Die genannten Chelatkomplexe sind nur beispielhaft erwähnt. Selbstverständlich lassen sich auch andere Chelatkomplexe einsetzen, wobei die Stabilitätskonstante (pK-Wert) über 1,8 liegen sollte. Bevorzugt sind Chelatkomplexe von Chelatbildnern mit einem pK-Wert von über 5.

Durch die genannten Maßnahmen wird die Austauschneigung der Harze so stark erhöht, daß sich diese erfindungsgemäß überraschend und ohne Schwierigkeiten im sogenannten « Batch-Verfahren » gezielt regenerieren lassen. So wird auch dem ungeschulten Laien ein Mittel zur Verfügung gestellt, verbrauchte Austauscherharze jederzeit gezielt regenerieren zu können. Werden dem Austauscherharz, das z. B. mit Übergangsmetallen, Calcium oder Magnesium beladen ist, die die erfindungsgemäßen Komplexe eines Chelatbildners, wie z. B. von Äthylendiamintetraessigsäure (EDTA) in Lösung angeboten,

so bilden die auf dem Harz gebundenen Kationen stabilere EDTA-Komplexe, d. h. sie gehen vom Harz nach folgendem Schema in Lösung :

$$R—CH_2—N(CH_2COO^-)_2Me + EDTA - X_2^+$$
$$\downarrow$$
$$R—CH_2—N(CH_2COO^-)_2X_2 + EDTA - ME^{++}$$

Me bedeuten hierbei an das verbrauchte Austauscherharz gebundene Metallionen ; $X^+$ sind Ionen, welche an einen Chelatbildner gebunden in der Regenerierlösung wirksam sind (Gegenionen).

Zur Erhaltung der Elektroneutralität die mit dem EDTA als Gegenionen $X^+$ angebotenen Kationen in äquivalenter Menge auf das Harz über. Durch entsprechende Wahl von $X^+$ ist es nunmehr möglich, das Harz gezielt zu regenerieren.

Die Gleichgewichtsverschiebung der Austauschreaktion ist überraschend so ausgeprägt, daß selbst im « Batch-Verfahren » eine weitgehend vollständige Regenerierung erzielt werden kann.

Soll das Harz unter Erzielung eines definierten Ca/Mg-Ionenverhältnisses regeneriert werden, so wird eine Lösung von $K_2$ (Ca EDTA) und $K_2$ (Mg EDTA) in bestimmtem Molverhältnis eingesetzt.

Gegenstand der Erfindung ist ein Verfahren zur Regenerierung von Ionenaustauscherharz zur Herbeiführung definierter Beladungszustände mittels Elektrolytlösungen, dadurch gekennzeichnet, daß eine Chelatkomplexe von Alkali- und Erdalkaliionen in vorbestimmten Molverhältnissen enthaltende Lösung verwendet wird.

Bevorzugte Chelatbildner sind Äthylendiamintetraessigsäure und Nitrilotrieessigsäure und als Chelatkomplexe 2-[Ca EDTA] und/oder 2-[Mg EDTA].

Bevorzugt wird die Regenerierung im Batch-Verfahren durchgeführt.

Bei der praktischen Anwendung des « Batch-Verfahrens » wird das Harz in ein wasserdurchlässiges Gefäß, z. B. ein feinmaschiges Netz, eine perforierte Kunststoffdose etc. verpackt und in belandener Form in das Aquarienwasser gebracht. Hier stellt sich mit der Zeit das gewünschte Kationenverhältnis ein. Ist das Harz verbraucht, wird es in verpackter Form in die entsprechende Komplex-Lösung gegeben und dort bei gelegentlichen Umrühren etwa 4-12 Stunden belassen. Nach Ablauf dieser Zeit ist das Harz regeneriert und kann nach kurzem Spülen mit klarem Wasser wieder in das Aquarium gebracht werden.

Das Verfahren hat den großen Vorteil, daß keine korrodierenden Säuren oder Laugen verwendet werden, sondern absolut ungiftige und ungefährliche Lösungen von Chelatbildnern.

Die folgenden Beispiele dienen der näheren Erläuterung der Erfindung, ohne diese zu beschränken :

## Beispiel 1

Versuch zur Bestimmung der Austauschneigung von $K_2$[Ca EDTA] bei der Regenerierung $Cu^{2+}$-Chelatharzes mit $K_2$[Ca EDTA]-Lösung

Gut wasserdurchlässiges Polypropylen-Vlies, daß mit Polyvinylchlorid beschichtet ist, wurde zu Beuteln mit dem Format 70 × 70 mm verarbeitet. Die Beutel wurden jeweils mit ca. 10 ml Ionenaustauscherharz gefüllt. Zur Regenerierung wurden die vollständig mit Calcium und Magnesiumionen beladenen Austauscherbeutel in einem Becherglas mit 40 ml einer Regenerierlösung überschichtet und 6-24 Stunden, vorzugsweise 6-12 Stunden, unter gelegentlichem kräftigem Umschwenken, stehengelassen. Insgesamt soll die Regenerierlösung mindestens 10 mal umgeschwenkt werden.

Es wurden Harzbeutel, gefüllt, mit einem Ionenaustauscher des Lewatit®-Typs TP 207 in der reinen $Cu^{2+}$-Form mit dem vierfachen Volumen an 0,2 bzw. 0,4 molarer $K_2$[Ca EDTA]-Lösung regeneriert. Beim Molverhältnis 1 : 1 ($Cu^{2+}$ : $K_2$[Ca EDTA] = 1 : 1) wurde ein Regenerierungseffekt von 68 % gefunden. Beim Molverhältnis 1 : 2 betrug dieser 71 %.

Da in der Aquaristik niemals eine so hohe $Cu^{2+}$-Beladung auftritt, lassen sich in der Praxis auch Schwermetallionen erfindungsgemäß praktisch quantitativ entfernen.

Die verwendete $K_2$[Ca EDTA]-Lösung eignet sich außerdem sehr gut, teilweise beladene Ca/Mg-Chelatharze unter Beibehaltung eines nicht näher bekannten, den vorhandenen Wasserbedingungen entsprechenden Ca/Mg-Ionenverhältnisses zu regenerieren. Wird ein entsprechendes Harz, beispielsweise mit einem Ca : Mg-Verhältnis von 1,53 : 1 mit einer einmolaren Lösung von $K_2$[Ca EDTA] regeneriert, so bleibt das Ca : Mg-Verhältnis nahezu unverändert (1,56 : 1), während Schwermetalle der Übergangsreihe quantitativ ausgetauscht werden.

## Beispiel 2

Regenerierung von $Cu^{2+}$-Chelat-Harz mit $K_2$[Ca EDTA] + $K_2$[Mg EDTA]-Lösungen unter Vorgabe eines definierten Ca : Mg-Verhältnisses

Nach der in Beispiel 1 gegebenen Arbeitsvorschrift wurden jeweils 10 ml $Cu^{2+}$-TP 207-Harz mit 60 ml eines Gemisches von $K_2$[Ca EDTA] und $K_2$[Mg EDTA] regeneriert.

Die folgende Tabelle I zeigt den Zusammenhang zwischen den Ionenverhältnissen der Regenerierlösung und den erhaltenen Ionenverhältnissen auf dem regenerierten Harz :

Tabelle I

| Regenerierlösung aus $K_2$ [CaEDTA] + $K_2$ [MgEDTA] ; Ca : Mg-Verhältnis | Regeneriereffekt | Ca : Mg-Verhältnis auf dem Harz |
|---|---|---|
| 5 : 1 | 62 % | 1,85 : 1 |
| 2 : 1 | 63 % | 0,63 : 1 |
| 1 : 1 | 68 % | 0,18 : 1 |
| 0,5 : 1 | 70 % | 0,06 : 1 |
| 0,2 : 1 | 73 % | 0,03 : 1 |

Danach ist es möglich, jedes gewünschte Ca : Mg-Verhältnis auf dem Harz einzustellen. Der von der Tabelle II überstrichene Bereich entspricht den in der Aquaristik üblicherweise auftretenden und brauchbaren Ionenverhältnissen.

Werte über 1,85 : 1 lassen sich nach Entfernung der Schwermetalle mit der verwendeten Regenerierlösung im Ca : Mg-Verhältnis von 5 : 1 mittels definierter und höher konzentrierter $CaCl_2$ + $MgCl_2$-Lösungen herstellen.

Beispiel 3

Einstellung eines bestimmten Ca/Mg-Ionenverhältnisses auf einem Chelat-Harz durch Regenerierung mit definierten $K_2$[Ca EDTA] + $K_2$[Mg EDTA]-Lösungsgemischen.

10 ml Ca/Mg-Harz (TP 207 ; Ca : Mg = 1,53 : 1) wurden mit $K_2$[Ca EDTA] + $K_2$[Mg EDTA]-Lösungen von definiertem Gehalt versetzt. Man gibt hierbei zu 60 ml einer einmolaren Lösung 200 ml Wasser. Die Gleichgewichtseinstellung vollzog sich unter gelegentlichem Umrühren innerhalb von 3 Stunden.

In der folgenden Tabelle II sind die resultierenden Ca/Mg-Ionenverhältnisse auf dem Ionenaustauscherharz wiedergegeben :

Tabelle II

| Regenerierlösung aus $K_2$ [CaEDTA] und $K_2$ [MgEDTA] Ca : Mg-Verhältnis | Regeneriertes Harz Ca : Mg-Verhältnis |
|---|---|
| Reine $K_2$ CaEDTA-Lösung | 1,56 : 1 |
| 7,6 : 1 | 1,15 : 1 |
| 5,7 : 1 | 1,0 : 1 |
| 5 : 1 | 0,9 : 1 |
| 2 : 1 | 0,4 : 1 |
| 1 : 1 | 0,18 : 1 |
| 0,5 : 1 | 0,07 : 1 |
| 0,2 : 1 | 0,04 : 1 |
| — | Unbehandeltes Harz 1,53 : 1 |

Aus der Tabelle II ist ersichtlich, daß das Ca : Mg-Verhältnis des Ausgangsharzes praktisch nicht verändert wird, wenn reine $K_2$[Ca EDTA]-Lösung zur Regenerierung verwendet wird, daß das Ca : Mg-Verhältnis aber gegen Null strebt, wenn reine $K_2$[Mg EDTA]-Lösung verwendet wird. Zwischenwerte lassen sich der Tabelle II entnehmen bzw. durch Interpolation ermitteln.

**Ansprüche**

1. Verfahren zur Regenerierung von Ionenaustauscherharz zur Herbeiführung definierter Beladungszustände mittels Elektrolytlösungen, dadurch gekennzeichnet, daß eine Chelatkomplexe von Alkali- und Erdalkaliionen in vorbestimmten Molverhältnissen enthaltende Lösung verwendet wird.

2. Verfahren gemäß Anspruch 1 und 2, dadurch gekennzeichnet, daß als Chelatkomplexe $^{2-}$(Ca EDTA) und $^{2-}$(Mg EDTA) verwendet werden.

3. Verfahren gemäß Anspruch 1, dadurch gekennzeichnet, daß das Harz im Batch-Verfahren behandelt wird.

**Claims**

1. Process for the regeneration of ion exchange resins for the bringing about of definite loading states by means of electrolyte solutions, characterised in that there is used a solution containing chelate complexes of alkali metal and alkaline earth metal ions in predetermined mole ratios.

2. Process according to claim 1, characterised in that $^{2-}$(Ca EDTA) and $^{2-}$(Mg EDTA) are used as chelate complexes.

3. Process according to claim 1, characterised in that the resin is treated in a batch process.

**Revendications**

1. Procédé pour régénérer les résines échangeuses d'ions pour amener les états de charge définis au moyen de solutions d'électrolytes, caractérisé en ce qu'on utilise une solution contenant des complexes de chélates d'ions alcalins et alcalino-terreux dans des rapports molaires prédéterminés.

2. Procédé selon la revendication 1, caractérisé en ce qu'on utilise comme complexes de chélate les $^{2-}$(Ca EDTA) et $^{2-}$(Mg EDTA).

3. Procédé selon la revendication 1, caractérisé en ce qu'on traite la résine dans un procédé discontinu.